# EUROPÄISCHE PATENTSCHRIFT

(11) **EP 0 858 380 B1**
(45) Veröffentlichungstag und Bekanntmachung des Hinweises auf die Patenterteilung: **06.10.1999**
(21) Anmeldenummer: 96938968.3
(22) Anmeldetag: 30.10.1996
(51) Int. Cl.: B23K 20/10, B23Q 5/52

(54) **ANORDNUNG ZUR BEGRENZUNG VON DREHWINKELN**
SYSTEM FOR LIMITING ROTATION ANGLES
DISPOSITIF POUR LIMITER DES ANGLES DE ROTATION

(30) Priorität: 31.10.1995 DE 19540585; 04.04.1996 DE 19613442
(43) Veröffentlichungstag der Anmeldung: 19.08.1998
(73) Patentinhaber: Hesse & Knipps GmbH, 33100 Paderborn (DE)
(72) Erfinder: HESSE, Hans-Jürgen, D-33106 Paderborn (DE); WALTHER, Frank, D-53721 Siegburg (DE); HAST, Christian, D-33106 Paderborn (DE)
(74) Vertreter: Hudler, Frank, Dipl.-Ing.
(86) Internationale Anmeldenummer: DE9602077
(87) Internationale Veröffentlichungsnummer: WO9716278

(56) Entgegenhaltungen:
- EP-A- 0 186 176
- US-A- 3 552 629
- US-A- 3 852 144

## Beschreibung

Die Erfindung betrifft eine Anordnung zur Begrenzung von Drehwinkeln drehbarer Baugruppen oder Bearbeitungseinheiten, mit einem Drehantrieb, bestehend aus einem endlosen und formschlüssigen Kraftübertragungselement, vorzugsweise einem Zahnriemen, der die Drehbewegung eines mit einer Antriebsscheibe verbundenen Antriebsmotors auf die drehbare Baugruppe überträgt, welche mit einer Abtriebsscheibe fest verbunden ist.

Die Begrenzung der Drehwinkel von drehbaren Baugruppen ist beispielsweise dann erforderlich, wenn die drehbaren Baugruppen gleichzeitig über Verbindungskabel mit Energie oder Steuersignaien zu versorgen sind, oder wenn Meßwerte über Kabel an signalauswertende Einrichtungen zu übertragen sind. Dabei bestehen bei zu realisierenden Drehwinkeln bis ca. 360 ° keinerlei Schwierigkeiten, indem die Drehbewegung entweder durch Anschläge begrenzt wird, oder indem auf der drehbaren Baugruppe Betätigungselemente angeordnet werden, die im Bereich des Drehwinkelendes auf einen ortsfest angeordneten Endschalter wirken.

Eine derartige Lösung geht aus der DE 37 39 957.8 hervor, in der eine Ultraschall-Drahtkontaktierungsvorrichtung mit einem drehbaren Bondkopf beschrieben ist, welcher über ein Zahnriemengetriebe angetrieben wird. Die Begrenzung des Drehwinkels des drehbaren Bondkopfes erfolgt hier durch einen parallel zur Drehachse auf einem Zahnriemenrad angeordneten Stift, der im Bereich des jeweiligen vorgegebenen Drehwinkelendes während der weiteren Drehbewegung einen schwenkbar gelagerten Hebel mitnimmt, der sich seinerseits nach Ausführung einer Schwenkbewegung an einen in Drehrichtung liegenden Endanschlag anlegt. Da die Begrenzung der Drehbewegung in beiden Drehrichtungen erfolgen muß, sind die Endanschläge außerhalb der Bewegungsbahn des Stiftes angeordnet, so daß dieser sich bei einer Rückbewegung ungehindert am Endanschlag für die jeweils andere Drehrichtung vorbeibewegen kann.

Eine solche Vorrichtung hat den entscheidenden Nachteil, daß das Anfahren des harten Endanschlages zu unkontrollierten und störenden Schwingungen führen kann, so daß die Funktion des Ultraschall-Drahtbonders insgesamt negativ beeinflußt wird.

Werden anstelle des harten Endanschlages ortsfest angeordnete Taster oder berührungslos arbeitende Schaltelemente verwendet, so stößt dies auf das Problem, daß in diesem Fall die Taster oder die berührungslos arbeitenden Schaltelemente nur kurzzeitig betätigt werden. Das bedeutet, daß zwar beim Erreichen der vorgesehenen Position kurzzeitig ein auswertbares Schaltsignal zur Verfügung steht, welches aber beim geringsten Überfahren der Endposition, oder einer beispielsweise durch Schwingungen verursachten geringfügigen entgegengesetzten Bewegung, sofort wieder verschwindet. Daraus resultieren erhebliche Schwierigkeiten und Unsicherheiten, die bis zur Beschädigung des drehbaren Bondkopfes oder der mit diesem gekoppelten Einrichtungen führen können.

Bei der Verwendung von Zahnriemengetrieben für den Antrieb drehbarer Bearbeitungseinheiten mit größeren Drehwinkeln ist es üblich, Mutter-Spindel-Getriebe mit Endanschlägen zur Einstellung des maximalen Drehwinkels der drehbaren Bearbeitungseinheit zu verwenden. Hierzu ist das Mutter-Spindel-Getriebe unmittelbar mit dem Antriebszahnrad des Zahnriemengetriebes zu koppeln. Die auf der Spindel bewegte Mutter wird hier zur Betätigung von Endschaltern verwendet. Der maximale Drehwinkel der drehbaren Bearbeitungseinheit kann dann durch axiale Verstellung der Endschalter eingestellt werden, da der Hub des Mutter-Spindel-Getriebes zwischen seinen beiden Endlagen dem Drehwinkel der drehbaren Bearbeitungseinheit proportional ist.

Eine derartige Anordnung ist konstruktiv sehr aufwendig und damit in der Herstellung teuer. Darüberhinaus kann die Positionierung der drehbaren Bearbeitungseinheit auf diese Weise nur indirekt vorgenommen werden. Die Folgen sind mögliche Ungenauigkeiten in der Positionierung und aufwendige Einstellvorgänge. Außerdem ist die Grundeinstellung nach einem Wechsel des Zahnriemens sehr schwierig und aufwendig.

Die Erfindung liegt deshalb die Aufgabe zugrunde, eine Anordnung zur Begrenzung beliebiger Drehwinkel von drehbaren Baugruppen oder Bearbeitungseinheiten zu schaffen, die mit einfachen Mitteln realisiert werden kann und die eine sehr große Betriebs- und Schaltsicherheit aufweist.

Erfindungsgemäß wird die Aufgabe bei einer Anordnung der eingangs genannten Art dadurch gelöst, daß wenigstens ein auf der Abtriebsscheibe befestigtes und mit dieser synchron rotierendes, oder mit dieser verbundenes Schaltelement vorgesehen ist, das durch mit dem Kraftübertragungselement verbundene Betätigungselemente in einer vorgegebenen Drehwinkelposition betätigbar ist, wobei das Schaltelement bei Überschreiten der vorgegebenen Drehwinkelposition betätigt bleibt und den Antriebsmotor stoppt.

Eine solche erfindungsgemäße Anordnung ist mit einfachen Mitteln zu realisieren und gewährleistet darüberhinaus eine sehr große Betriebssicherheit, da das Erreichen des gewünschten Drehwinkels unmittelbar an der drehbaren Bearbeitungseinheit festgestellt wird. Damit entfallen zusätzliche Meßvorrichtungen, die zu Unsicherheiten und Ungenauigkeiten führen würden. Darüberhinaus erfolgt die Begrenzung des Drehwinkels ohne feste Anschläge, so daß das Abbremsen der Bearbeitungseinheit nahezu schwingungsfrei und sanft erfolgt, wenn der Antriebsmotor bei Erreichen des vorgesehenen Drehwinkels abgeschaltet oder auf Bremsbetrieb umgeschaltet wird.

Als Betätigungselemente werden bevorzugt die Nocken des Zahnriemens betätigt. Um in diesem Fall eine eindeutige Zuordnung zwischen vorgegebener Drehwinkelposition und betätigtem Schaltelement zu erreichen, ist es zweckmäßig, daß der Zahnriemen innerhalb des erlaubten Drehbereiches der Abtriebsscheibe in der Position des Schaltelementes ausgespart wird, indem die das Schaltelement an sich betätigende Nocke entfernt worden ist.

In einer Variante der Erfindung sind die Betätigungselemente als mit dem Zahnriemen verbundene Zusatznocken ausgebildet, wobei diese bevorzugt lösbar mit dem Zahnriemen verbunden sind.

Das Schaltelement ist vorzugsweise als mechanisch betätigbarer Taster ausgebildet, der radial, die Verzahnung unterbrechend, in die Abtriebsscheibe eingelassen ist. Eine derartige Anordnung gewährleistet eine hohe Betriebssicherheit und ist Darüberhinaus leicht zu warten.

Die Taster sind in der Weise auf der Abtriebsscheibe angeordnet, daß deren Betätigung in der vorgesehenen Drehwinkelposition erfolgt, wenn der Zahnriemen als Tangente auf die Abtriebsscheibe aufläuft.

In einer Variante kann das Schaltelement auch optisch oder elektromagnetisch betätigbar sein. Hierzu eignen sich beispielsweise Reflexlichtschranken oder auch elektromagnetisch betätigbare Reed-Kontakte.

Der Abstand zwischen zwei Betätigungselementen auf dem Zahnriemen entspricht der Entfernung, die ein ortsfester Punkt auf der Abtriebsscheibe bei einer Drehung um einen vorgegebenen Winkelbetrag zurücklegt. Der begrenzbare Drehwinkel wird damit nur durch die Länge des Zahnriemens beschränkt. Auf diese Weise wird ersichtlich, daß es mit der Erfindung problemlos möglich ist, Drehwinkel für drehbare Bearbeitungseinheiten vorzugeben, die über 360 ° liegen. Grundsätzlich lassen sich ganzzahlige Vielfache von 360 ° zuzüglich dem Winkel zwischen den Tangenten realisieren, mit denen sich der Zahnriemen an der Abtriebsscheibe anlegt.

Eine besonders hohe Betriebssicherheit wird dadurch erreicht, daß sich die Taster und die zugehörigen Betätigungselemente jeweils bei Überschreiten des vorgegebenen Drehwinkels ortsfest miteinander verbunden weiter bewegen. Das bedeutet, daß das Schaltsignal des jeweiligen Tasters auch dann weiter zur Verfügung steht, wenn sich die Bearbeitungseinheit über den maximalen Drehwinkel hinaus bewegen sollte, was infolge des Trägheitsmomentes der Fall sein könnte. Ein weiterer Vorteil dieser Anordnung ist darin zu sehen, daß damit die Richtung für die Rückwärtsbewegung eindeutig bestimmt ist.

In einer weiteren Ausgestaltung der Erfindung ist die Abtriebsscheibe mit einem Indicator zur Festlegung der Nullstellung versehen. Damit wird die Montage oder das Wechseln des Zahnriemens wesentlich erleichtert.

In Fortführung der Erfindung ist der Abtriebsscheibe oder der Antriebsscheibe eine durch die Taster auslösbare Bremse zugeordnet. Damit wird die Möglichkeit für ein schnelles und definiertes Abbremsen der Bearbeitungseinheit bei Erreichen des maximalen Drehwinkels geschaffen.

Die Erfindung soll nachfolgend anhand eines Ausführungsbeispieles und einer zugehörigen Zeichnungsfigur näher erläutert werden.

Die Zeichnungsfigur zeigt ein Zahnriemengetriebe, bei dem eine an der Welle eines Antriebsmotors 1 befestigte Antriebsscheibe 2 über einen Zahnriemen 3 mit einer Abtriebsscheibe 4 verbunden ist, die in einer Halterung 5 einer nicht näher dargestellten Bondeinheit drehbar gelagert ist. Die Antriebsscheibe 2 und die Abtriebsscheibe 4 sind an ihrem Umfang jeweils mit einer Verzahnung 6 versehen, deren Teilung derjenigen des Zahnriemens 3 entspricht. Zur Begrenzung des Drehwinkels der Abtriebsscheibe 4 in einer Drehrichtung ist in diese, deren Verzahnung 6 unterbrechend, ein Taster 7 eingelassen. Der Taster 7 ist dabei derart in den Umfang der Abtriebsscheibe 4 eingelassen, daß dessen Schaltelement nicht über die Verzahnung 6 hervorsteht, so daß dieser durch die Zähne des Zahnriemens 3 nicht betätigt wird.

Die Betätigung des mit der Abtriebsscheibe 4 mitbewegten Tasters 7 erfolgt mit Hilfe eines Zusatznockens 8, welcher am Zahnriemen 4 in der Weise befestigt ist, daß dieser in Richtung zur Verzahnung der Abtriebsscheibe 4 aus der Verzahnung des Zahnriemens 3 hervorsteht. Vorzugsweise ist der Zusatznocken 8 anstelle eines Zahnes des Zahnriemens 3 angeordnet. Die Befestigung des Betätigungselementes 8 am Zahnriemen kann durch Verschrauben, Nieten, o.dgl. erfolgen.

Mit dieser Anordnung ist die Begrenzung des Drehwinkels einer drehbaren Bearbeitungseinheit in einer Richtung möglich, wobei bereits hier besondere Vorteile zu verzeichnen sind. Diese sind darin zu sehen, daß das Abbremsen bei Erreichen des Drehwinkelendes, bzw. bei der Betätigung des Tasters 7, sanft erfolgen kann, da keinerlei feste Anschläge mehr erforderlich sind. Das Abbremsen kann einfach dadurch erfolgen, daß der Antriebsmotor 1 abgeschaltet, oder auf Bremsbetrieb umgeschaltet wird, wenn der Taster 7 betätigt wird. Die Folge ist, daß die sonst durch das abrupte Stoppen der Drehbewegung verursachten Schwingungen vollständig vermieden werden. Bei einer ausreichenden Länge des Zahnriemens 4 ist es natürlich auch möglich, den Drehwinkel in beiden Richtungen zu begrenzen.

In einer besonderen Variante der Erfindung ist es möglich, eine Drehwinkelbegrenzung ohne Zusatznocken 8 auf dem Zahnriemen 3 vorzunehmen. In diesem Fall übernehmen die Nocken des Zahnriemens 3 die Betätigung der Taster 7. Diese Variante hat den besonderen Vorteil, daß eine sonst vorhandene Schwächung des Zahnriemens 3 durch die Verschraubung des Zusatznockens 8 entfällt. Außerdem kann die sonst erforderliche Nut in der Verzahnung der Antriebsscheibe 2 entfallen.

Da der Taster 7 bei einem Umlauf der Abtriebsscheibe 4 mehrmals mit einem Nocken des Zahnriemens 3 in Kontakt kommt, würde der Taster 7 jedesmal betätigt, was unerwünscht ist. Aus diesem Grund ist es erforderlich, die entsprechenden Nocken, die im erlaubten Drehbereich der Abtriebsscheibe mit dem Taster 7 in Kontakt kommen würden, auszusparen. Da die Anzahl und Größe der Nocken keinen Einfluß auf die Zugfestigkeit des Zahnriemens 3 hat, tritt bei einer Entfernung einer oder mehrerer Nocken keine Schwächung des Zahnriemens ein. Damit wird ebenfalls eine eindeutige Zuordnung der Abtriebsscheibe 4 bzw. der Taster 7 zum Zahnriemen 3 und somit eine eindeutige Begrenzung des Drehwinkels erreicht, wie dies bei der Verwendung von Zusatznocken 8 der Fall ist.

Es besteht weiterhin die Möglichkeit, die Abtriebsscheibe 4 oder die Antriebsscheibe 2 mit einer zusätzlichen Bremse zu versehen, die ebenfalls durch den Taster 7 ausgelöst wird.

Mit der vorstehend beschriebenen Vorrichtung kann auf besonders einfache Weise eine Begrenzung des Drehwinkels auf einen vorgegebenen Wert über 360 ° erfolgen, wie dies beispielsweise bei Ultraschall-Drahtbondern mit drehbarem Bondkopf zweckmäßig ist. Dadurch können die Drahtbrücken zwischen den Bondinseln oder Bondpads auf Halbleiterbauelementen und Außenkontakten in jeder beliebigen Richtung und in kürzester Zeit hergestellt werden.

Durch die Erfindung ist es nunmehr möglich, beliebige Drehwinkel zu begrenzen, wobei auch mehrere Umdrehungen, oder Teile davon, realisiert werden können, wie nachfolgend erläutert. Voraussetzung hierfür ist, daß der Zahnriemen 3 eine ausreichende Länge aufweist. Grundsätzlich lassen sich ganzzahlige Vielfache von 360 ° zuzüglich dem Winkel zwischen den Tangenten realisieren, mit denen sich der Zahnriemen 3 an der Abtriebsscheibe 4 anlegt.

Hierzu ist die Abtriebsscheibe 4 lediglich mit zwei Tastern 7, 7' zu versehen, die so angeordnet sein müssen, daß deren Betätigung dann erfolgt, wenn der Zahnriemen 3 in der vorgesehenen Drehwinkelposition mit seinen Zusatznocken 8, 8' als Tangente aufläuft. Die Betätigung der Taster 7, 7' kann dann mit Hilfe von zwei Zusatznocken 8, 8' erfolgen, die am Zahnriemen 3 befestigt sind. Der Abstand zwischen den Zusatznocken 8, 8' muß dann der Entfernung entsprechen, die ein ortsfester Punkt auf der Abtriebsscheibe bei der Drehbewegung um den vorgegebenen Winkelbetrag zurücklegt. Dieser Drehwinkel kann je nach den Erfordernissen beliebige Werte annehmen.

Dadurch, daß sich die Taster 7, 7' und die zugehörigen Zusatznocken 8, 8' jeweils bei Erreichen und nachfolgendem Überschreiten des vorgegebenen Drehwinkels gemeinsam weiter bewegen, wird eine besonders hohe Betriebssicherheit erreicht. Das Schaltsignal des jeweiligen Tasters 7, 7' steht dadurch auch dann weiter zur Verfügung, wenn sich die Bearbeitungseinheit, bzw. die drehbare Bondeinheit über den maximalen Drehwinkel hinaus bewegen sollte. Damit wird ein erneutes Einschalten des Antriebsmotors 1 nach einem möglichen Überschreiten des vorgegebenen Drehwinkels ausgeschlossen, bzw. nur eine Drehrichtung zugelassen, nämlich die nicht durch das Erreichen des Endschalters ausgeschlossene Drehrichtung.

Eine identische Funktion wird erreicht, wenn die Zusatznocken 8, 8' auf dem Zahnriemen 3 weggelassen werden und dafür die Nocken des Zahnriemens 3 entfernt werden, die keine Betätigung der Taster 7, 7' verursachen sollen.

Die vorstehend beschriebene Art und Weise der Drehwinkelbegrenzung von drehbaren Baugruppen stellt eine Ausführungsform der Erfindung dar. Es ist jedoch auch möglich, eine Drehwinkelbegrenzung mit verschiedenen Kombinationen von Tastern 7 auf der Abtriebsscheibe 4 und zugehörigen Zusatznocken 8, 8' auf dem Zahnriemen 3 oder ausgesparten Nocken des Zahnriemens 3 zu realisieren.

Um eine eindeutige und bleibende Zuordnung der Zusatznocken 8, 8' zu den Tastern 7, 7' zu gewährleisten, muß zwischen der Abtriebsscheibe 4 und dem Kraftübertragungselement jegliche Relativbewegung ausgeschlossen werden. Aus diesem Grund ist hierfür ein Zahnriemen am besten geeignet, wobei die Verwendung einer Kette ebenfalls möglich ist.

Weiterhin befindet sich auf der Abtriebsscheibe 4 ein Indicator 9, der auf ähnliche Weise in die Abtriebsscheibe 4 eingelassen ist, wie die Taster 7, 7'. Mit Hilfe dieses Indicators 9 kann die Abtriebsscheibe 4 und damit der drehbare Bondkopf exakt in einer Nullstellung oder Ausgangsstellung positioniert werden. Dadurch werden Montagevorgänge, wie das Wechseln des Zahnriemens 4 ganz wesentlich erleichtert.

### Bezugszeichenliste

- 1: Antriebsmotor
- 2: Antriebsscheibe
- 3: Zahnriemen
- 4: Abtriebsscheibe
- 5: Halterung
- 6: Verzahnung
- 7: Taster
- 7': Taster
- 8': Zusatznocken
- 8: Zusatznocken
- 9: Indicator

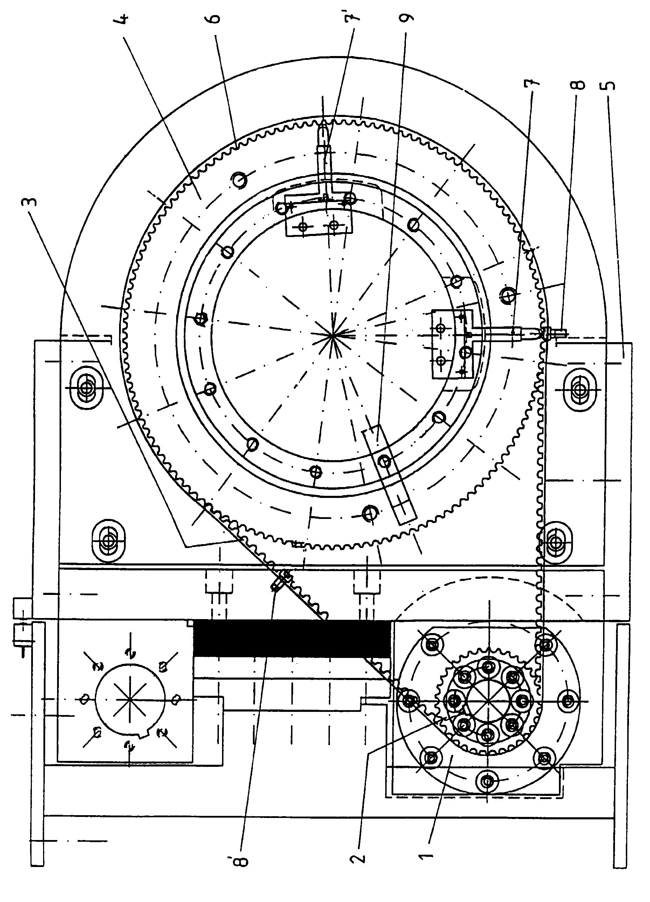

## Patentansprüche

1. Anordnung zur Begrenzung von Drehwinkeln drehbarer Baugruppen oder Bearbeitungseinheiten, mit einem Drehantrieb, bestehend aus einem endlosen und formschlüssigen Kraftübertragungselement, vorzugsweise einem Zahnriemen, der die Drehbewegung eines mit einer Antriebsscheibe verbundenen Antriebsmotors auf die drehbare Baugruppe überträgt, die mit einer Abtriebsscheibe fest verbunden ist, **dadurch gekennzeichnet,** daß wenigstens ein auf der Abtriebsscheibe (4) befestigtes und synchron mit dieser rotierendes, oder mit dieser verbundenes Schaltelement vorgesehen ist, das durch mit dem Kraftübertragungselement verbundene und mit diesem bewegbare Betätigungselemente in einer vorgegebenen Drehwinkelposition betätigbar ist, wobei das Schaltelement bei Überschreiten der vorgegebenen Drehwinkelposition betätigt bleibt und den Antriebsmotor (1) stoppt.

2. Anordnung nach Anspruch 1, **dadurch gekennzeichnet,** daß die Betätigungselemente die Nocken des Zahnriemens (3) sind.

3. Anordnung nach Anspruch 2, **dadurch gekennzeichnet,** daß der Zahnriemen (3) innerhalb des erlaubten Drehbereiches der Abtriebsscheibe (4) in der Position des Schaltelementes ausgespart ist, indem die das Schaltelement an sich betätigende Nocke entfernt worden ist.

4. Anordnung nach Anspruch 1, **dadurch gekennzeichnet,** daß die Betätigungselemente als mit dem Zahnriemen (3) verbundene Zusatznocken (8, 8') ausgebildet sind.

5. Anordnung nach Anspruch 4, **dadurch gekennzeichnet,** daß die Zusatznocken (8, 8') lösbar mit dem Zahnriemen (3) verbunden sind.

6. Anordnung nach den Ansprüchen 1 bis 5, **dadurch gekennzeichnet,** daß das Schaltelement als mechanisch betätigbarer Taster (7; 7') ausgebildet ist.

7. Anordnung nach Anspruch 6, **dadurch gekennzeichnet,** daß der Taster (7, 7') radial, die Verzahnung (6) unterbrechend, in die Abtriebsscheibe (4) eingelassen ist.

8. Anordnung nach Anspruch 6 und 7, **dadurch gekennzeichnet,** daß die Taster (7, 7') in der Weise auf der Abtriebsscheibe (4) angeordnet sind, daß deren Betätigung in der vorgesehenen Drehwinkelposition erfolgt, wenn der Zahnriemen (3) als Tangente auf die Abtriebsscheibe (4) aufläuft.

9. Anordnung nach einem der Ansprüche 1 bis 5, **dadurch gekennzeichnet,** daß das Schaltelement als optisch oder elektromagnetisch betätigbarer Schalter ausgebildet ist.

10. Anordnung nach einem der Ansprüche 1 bis 10, **dadurch gekennzeichnet,** daß der Abstand zwischen zwei Betätigungselementen (8, 8') auf dem Zahnriemen (3) der Entfernung entspricht, die ein ortsfester Punkt auf der Abtriebsscheibe (4) bei einer Drehung um einen vorgegebenen Winkelbetrag zurücklegt.

11. Anordnung nach den Ansprüchen 1 bis 10, **dadurch gekennzeichnet,** daß die Abtriebsscheibe (4) mit einem Indicator (9) zur Festlegung der Nullstellung versehen ist.

12. Anordnung nach den Ansprüchen 1 bis 11, **dadurch** **gekennzeichnet,** daß der Abtriebsscheibe (4) oder der Antriebsscheibe (2) eine durch die Taster (7, 7') auslösbare Bremse zugeordnet ist.

## Claims

1. Configuration for limiting of swing angles of turnable components or processing units, with a turnable drive unit, consisting of an endless and positive power transfer element, preferably a toothed belt that transfers the turning movement of a drive motor connected with a drive pulley onto the turnable component, which is permanently connected to a driven pulley, **characterized in that** there is at least one switching element attached to the driven pulley (4), rotating synchronously with it or attached to it, which can be actuated in a specified swing angle position by means of movable actuating elements connected with the power transfer element and movable with this, wherein the switching element remains actuated upon exceeding the specified swing angle position and stops the drive motor (1).

2. Configuration according to claim 1, **characterized in that** the actuating elements are the cams of the toothed belt (3).

3. Configuration according to claim 2, **characterized in that** the toothed belt (3) is recessed within the allowed swing area of the driven pulley (4) in the position of the switching element, in that the cam actuating the switching element has been removed.

4. Configuration according to claim 1, **characterized in that** the actuating elements are designed as additional cams (8, 8') connected to the toothed belt (3).

5. Configuration according to claim 4, **characterized in that** the additional cams (8, 8') are detachable from the toothed belt (3).

6. Configuration according to claims 1 to 5, **characterized in that** the switching element is designed as a key (7, 7') that can be actuated mechanically.

7. Configuration according to claim 6, **characterized in that** the key (7, 7') is countersunk radially into the driven pulley (4), interrupting the toothing.

8. Configuration according to claims 6 and 7, **characterized in that** the keys (7, 7') are arranged on the driven pulley (4) in such a way that they are actuated in the specified swing angle position when the toothed belt (3) ascends onto the driven pulley (4) as a tangent.

9. Configuration according to one of the claims 1 to 5, **characterized in that** the switching element is designed as a switch that can be optically or electromagnetically actuated.

10. Configuration according to one of the claims 1 to 10, **characterized in that** the interval between two actuating elements (8, 8') on the toothed belt (3) corresponds to the distance that a stationary point on the driven pulley (4) travels in one revolution around a specified angle.

11. Configuration according to claims 1 to 10, **characterized in that** the driven pulley (4) is provided with an indicator (9) for determining the zero position.

12. Configuration according to claims 1 to 11, **characterized in that** a brake that can be engaged by the keys (7, 7') is allocated to the driven pulley (4) or the drive pulley (2).

## Revendications

1. Configuration destinée à limiter les angles d'orientation des modules ou des unités d'usinage orientables, avec un entraînement pivotant, constitué d'un élément de transmission de la force sans fin et claboté, de préférence d'une courroie dentée qui transmet le mouvement de rotation d'un moteur d'entraînement relié à une poulie d'entraînement au module orientable, qui est fermement relié à une poulie attaquée, caractérisée en ce qu'au moins un élément de commutation fixé sur la poule attaquée (4) et rattaché à celle-ci ou pivotant avec celle-ci de façon synchrone, qui peut être actionné dans une position d'angle d'orientation prédéterminée par des éléments de commande reliés à l'élément de transmission de la force et amovibles avec celui-ci, sachant que l'élément de commutation reste à l'état actionné lorsque la position d'angle d'orientation prédéterminée est dépassée et sachant qu'il stoppe le moteur d'entraînement (1).

2. Configuration selon la revendication 1 caractérisée en ce que les éléments de commande sont les cames de la courroie dentée (3).

3. Configuration selon la revendication 2 caractérisée en ce que la courroie dentée (3) est évidée au sein de la partie autorisée de rotation de la poule attaquée (4) dans la position de l'élément de commutation, la came actionnant l'élément de commutation ayant été retirée.

4. Configuration selon la revendication 1 caractérisée en ce que les éléments de commande sont formés comme des cames supplémentaires (8, 8') reliées à la courroie dentée (3).

5. Configuration selon la revendication 4 caractérisée en ce que les cames supplémentaires (8, 8') sont reliées de façon amovible à la courroie dentée (3).

6. Configuration selon les revendications 1 à 5 caractérisée en ce que l'élément de commutation est formé comme un bouton-poussoir à commande mécanique (7, 7').

7. Configuration selon la revendication 6 caractérisée en ce que le bouton-poussoir (7, 7') est emboîté radialement dans la poulie attaquée (4), créant une interruption dans la denture (6).

8. Configuration selon les revendications 6 et 7 caractérisée en ce que les boutons-poussoirs (7, 7') sont disposés sur la poule attaquée (4) de manière à ce que leur actionnement s'effectue dans la position d'angle d'orientation prévue lorsque la courroie dentée (3) monte sur la poulie attaquée (4) comme tangente.

9. Configuration selon l'une des revendications 1 à 5 caractérisée en ce que l'élément de commutation est formé comme un interrupteur à commande optique ou électromagnétique.

10. Configuration selon l'une des revendications 1 à 10 caractérisée en ce que l'intervalle entre les deux éléments de commande (8, 8') sur la courroie dentée (3) correspond à la distance qui renvoie un point stationnaire sur la poulie attaquée (4) lors d'une rotation sur un angle prédéterminé.

11. Configuration selon les revendications 1 à 10 caractérisée en ce que la poule attaquée (4) est munie d'un indicateur (9) servant à déterminer la position zéro.

12. Configuration selon les revendications 1 à 11 caractérisée en ce qu'un frein pouvant être débloqué à l'aide des boutons-poussoirs (7, 7') est affecté à la poulie attaquée (4) ou à la poulie d'entraînement (2).
